(19) Europäisches Patentamt
European Patent Office
Office européen des brevets

(11) EP 4 814 178 A1

(12) EUROPEAN PATENT APPLICATION
published in accordance with Art. 153(4) EPC

(43) Date of publication:
**30.09.2026 Bulletin 2026/40**

(21) Application number: **24893957.1**

(22) Date of filing: **30.10.2024**

(51) International Patent Classification (IPC):
***D04H 1/4391*** *(2012.01)* ***D21H 13/12*** *(2006.01)*
***H01M 50/44*** *(2021.01)*

(52) Cooperative Patent Classification (CPC):
**D04H 1/4391; D21H 13/12; H01M 50/44;**
Y02E 60/10

(86) International application number:
**PCT/JP2024/038618**

(87) International publication number:
**WO 2025/109965 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023 JP 2023196380**

(71) Applicant: **Toray Industries, Inc.**
**Tokyo 103-8666 (JP)**

(72) Inventors:
- **ISHIKAWA, Tatsuya**
  **Mishima-shi, Shizuoka 411-8652 (JP)**
- **MATSUURA, Tomohiko**
  **Mishima-shi, Shizuoka 411-8652 (JP)**
- **MASUDA, Masato**
  **Mishima-shi, Shizuoka 411-8652 (JP)**

(74) Representative: **Mewburn Ellis LLP**
**Aurora Building**
**Counterslip**
**Bristol BS1 6BX (GB)**

# (54) NONWOVEN FABRIC, AND FIBROUS PRODUCT AND SHEET CONTAINING SAME

(57) A nonwoven fabric of 30.0 μm or less in thickness, and of 0.50 or more in toughness value calculated as a product of a specific tensile strength and a square root of a tensile elongation. The present invention relates to a nonwoven fabric that has excellent mechanical characteristics while being a thin film, and provides a thin-film nonwoven fabric that is excellent in processability.

[Fig.3]

7
8
9
10



Processed by Luminess, 75001 PARIS (FR)

## Description

### TECHNICAL FIELD

The present invention relates to a thin-film nonwoven fabric that has excellent mechanical characteristics.

### BACKGROUND ART

Fibers have various features derived from the thin and long forms of the fibers, and are thus widely used not only in clothing applications but also in industrial material applications, and in recent years when the lives of people have been enriched, fibrous products that have more advanced functions have been required.

One of the forms of fibrous products in which the form of fibers are utilized is a nonwoven fabric in which fibers are three-dimensionally overlapped with each other, and bonded by a mechanical, chemical, or thermal method, the nonwoven fabric is a material characterized by a porous structure including voids between constituent fibers.

Examples of development of utilizing the porous structure include a diaphragm that filters or separates a desired substance, and a base material that is impregnated with or supports a material that is not capable of maintaining its form by itself, and with the increasing demand for reduction in size and weight and increase in performance for various modules that are products in which the examples are used, the reduction in thickness has been also required for nonwoven fabrics as constituent members.

While an approach of reducing the basis weight (g/m$^2$), which is a constituent fiber amount per unit area, is effective for the reduction in thickness for a nonwoven fabric, the formation of the nonwoven fabric is, with decrease in constituent fiber amount, degraded, thereby making product defects likely to be caused, and research and technological development for making the constituent fibers ultrafine have been actively conducted as a method for obtaining a nonwoven fabric that is excellent in formation while being a thin film.

Patent Document 1 proposes a technique related to a thin-film nonwoven fabric obtained by wet papermaking with ultrafine fibers as main fibers. Microfibers of several μm in fiber diameter have a constituent fiber number increased by five times or more as compared with common fibers of dozen μm in fiber diameter, and enable high-quality thin-film nonwoven fabrics to be stably obtained even with a low basis weight of several g/m$^2$, with which the extremely small constituent fiber amount is likely to cause defects due to the formation degraded. In addition, the densification of the nonwoven fabric structure due to making the constituent fibers ultrafine enables a thin-film nonwoven fabric below 20 μm in thickness to be obtained in combination with the effect of reducing the fiber amount due to the low basis weight.

Patent Document 2 proposes a technique related to a thin-film nonwoven fabric obtained by wet papermaking with, as main fibers, nanofibers obtained by further making fibers ultrafine. The use of nanofibers reduced in fiber diameter to the utmost limit increases the number of fibers by several hundred times as compared with fibers of dozen μm in fiber diameter, and enables a thin-film nonwoven fabric of about 20 μm in thickness to be obtained with a low basis weight of about 10 g/m$^2$ by structure densification due to the nanofiber preparation, while achieving excellent formation.

Patent Document 3 proposes a technique related to a thin-film nonwoven fabric obtained by wet papermaking with nanofibers as main fibers and moist heat adhesive fibers as binder fibers. The technique dissolves, in a heat bonding step, the moist heat adhesive fibers without leaving any fiber skeleton to firmly bond nanofibers as main fibers, in which the binder fiber skeleton with a large diameter disappears, thereby remarkably producing the structure densification effect derived from the microfiber preparation for main fibers, and thus achieves an ultrathin film of about 10 μm in thickness with a low basis weight of about 10 g/m$^2$.

### PRIOR ART DOCUMENTS

### PATENT DOCUMENTS

Patent Document 1: Japanese Patent Laid-open Publication No. S60-38193
Patent Document 2: International Publication No. WO 2008/130020
Patent Document 3: Japanese Patent Laid-open Publication No. 2023-69101

### SUMMARY OF THE INVENTION

### PROBLEMS TO BE SOLVED BY THE INVENTION

Patent Document 1 aims at achieving a balance between reduction in thickness and excellent formation for a

nonwoven fabric by wet papermaking with the low basis weight with the utilization of the increase in the number of constituent fibers and structure densification by making the main fibers ultrafine. This technique reduces, although the constituent fibers are made ultrafine, the fiber diameter only to about half at most as compared with common fibers, thereby limiting the effect of increasing the number of fibers, and with the low basis weight of several g/$m^2$, the mechanical characteristics may be extremely degraded, thereby in the case of a thin-film nonwoven fabric of 30 μm or less in thickness, resulting in breakage thereof due to fluctuation in tension or contact with other members in a modularization process.

Patent Document 2 aims at enhancing the effect of increasing the number of constituent fibers and the structure densification effect by applying, to main fibers, the nanofibers reduced in fiber diameter to the utmost limit. However, in order to obtain a wet nonwoven fabric that is excellent in formation, it is necessary to uniformly disperse the nanofibers in a papermaking stock solution, and it is necessary to reduce the fiber lengths to extremely small fiber lengths of 1 mm or less for suppressing entanglement between the nanofibers. Thus, the fiber lengths of the main fibers for the skeleton of the nonwoven fabric are extremely reduced, thereby decreasing the number of points joined between the fibers, and the stress applied to the nonwoven fabric may fail to be transmitted well between the fibers, thereby degrading the mechanical characteristics as compared with general-purpose nonwoven fabrics. In addition, in addition to the degraded mechanical characteristics, for example, the fibers may fall off, and thus, the handleability and process passability of the material may need to be improved.

Patent Document 3 aims at forming a thin-film nonwoven fabric that is excellent in mechanical characteristics by using the moist heat adhesive fibers for binder fibers while applying the nanofibers to the main fibers as in Patent Document 2. This technique dissolves the binder fibers without leaving any fiber skeleton to form an adhesive film to firmly bond the nanofibers to each other, thereby allowing breakage due to missing between the fibers to be suppressed, but the binder fibers block the voids between the fibers, and thus, the porosity is as extremely low as about 30%, and the function achieved by utilizing the porous structure of the nonwoven fabric may be impaired.

As described above, there are techniques for obtaining wet thin-film nonwoven fabrics that are high in quality while being low in basis weight by applying various ultrafine fibers to constituent fibers, but defects as break starting points are likely to appear due to the small constituent fiber amount, and the mechanical characteristics tend to be degraded, and thus, applicable manufacturing and molding processes may be limited. In addition, in the first place, the degraded mechanical characteristics of the thin film nonwoven fabric act as a hindrance, thereby making it difficult to form nonwoven fabrics with an extremely low basis weight that can achieve such ultrathin films as required for dramatic reduction in size and weight and increase in performance for various modules.

For this reason, among nonwoven fabrics that are low in basis weight and extremely small in constituent fiber amount, a nonwoven fabric that achieves a balance between a thin film and mechanical characteristics has been desired.

SOLUTIONS TO THE PROBLEMS

The above-mentioned object is achieved by the following means. Specifically,

(1) A nonwoven fabric of 30.0 μm or less in thickness, and of 0.50 or more in toughness value calculated as a product of a specific tensile strength and a square root of a tensile elongation.
(2) The nonwoven fabric according to (1), having a porosity of 50% or more.
(3) The nonwoven fabric according to (1) or (2), in which a bonded area per fiber cross-sectional area in a fiber constituting the nonwoven fabric is 3.00 or more.
(4) A fibrous product including the nonwoven fabric according to (1) in at least a part of the fibrous product.
(5) A sheet in which the nonwoven fabric according to (1) is filled with a resin or particles.
(6) A solid electrolyte sheet in which the nonwoven fabric according to (1) is filled with a solid electrolyte.

EFFECTS OF THE INVENTION

The present invention relates to a nonwoven fabric that has excellent mechanical characteristics while being a thin film, and can provide a thin-film nonwoven fabric that is excellent in processability.

BRIEF DESCRIPTION OF THE DRAWINGS

Fig. 1 is a schematic view of a transverse sectional structure of a flat fiber as an example of constituent fibers of a nonwoven fabric according to the present invention.
Fig. 2 is a schematic view of a transverse sectional structure of a multilayer laminated fiber for use as a raw material of flat fibers.

Fig. 3 is a schematic view showing a part where a main fiber and a binder fiber are orthogonally bonded.

EMBODIMENTS OF THE INVENTION

Hereinafter, the present invention will be described in detail together with desirable embodiments.

The present invention relates to a nonwoven fabric characterized by having excellent mechanical characteristics while being a thin film, and in order to achieve the object of the present invention, the nonwoven fabric needs to be a thin film that has a thickness of 30.0 μm or less, which is a first requirement in the present invention.

The thickness of the nonwoven fabric herein is determined as follows.

The value obtained by measuring the thickness of the nonwoven fabric according to the present invention in units of mm with the use of a dial thickness gauge (DGN-250B manufactured by PEACOCK Co., Ltd., gauge head shape: 25 mmφ, graduation: 0.0001 mm, measuring force: 1.2 N or less) is converted into units of μm. This is performed at arbitrary five points per sample, and the arithmetic mean thereof is rounded off to one decimal place to obtain a value defined as the thickness of the nonwoven fabric according to the present invention.

As long as the thickness is 30.0 μm or less, in a case where the nonwoven fabric according to the present invention is used as a diaphragm or a base material, the nonwoven fabric allows, without compressing the space in the module, general demands for reduction in size and weight and increase in performance to be satisfied.

In addition, from this viewpoint, as the thickness of the nonwoven fabric is reduced, the effect of space saving in the case of application to various modules can be made remarkable, and as long as the thickness is 15.0 μm or less, which is about half the thickness of a general-purpose thin-film nonwoven fabric, demands for reduction in size and weight and increase in performance can be satisfied even for a high-performance module such as a small precision electronic device required to be more highly reduced in thickness, and the thickness can be mentioned as a preferable range.

Furthermore, the thickness of 8.0 μm or less is a more preferable range in the present invention, and as long as the thickness falls within the range, not only the effect of space saving mentioned above is more enhanced, but also a new effect is produced by extremely reducing the thickness of the nonwoven fabric itself. More specifically, the flexural rigidity of the nonwoven fabric is 1/50 times or less as high as that of a general-purpose thin-film product (thickness: 30 μm), thereby resulting in significant softening of the nonwoven fabric, and in a case where the nonwoven fabric according to the present invention is, as a base material, combined with another material, the nonwoven fabric can flexibly follow the surface profile of the other material to enhance the adhesion, and thus, the thickness can be mentioned as a more preferable range.

Further, the thickness of 5.0 μm or less is a particularly preferable range in the present invention, and as long as the thickness falls within the range, in addition to the effect of significant space saving, the flexural rigidity of the nonwoven fabric is 1/200 times or less as high as that of a general-purpose thin-film product, and the nonwoven fabric can also adhesively follow a complicated shape, and thus, the performance in the case of use as a base material can be enhanced. In addition, as long as the thickness is 5.0 μm or less, even a high-viscosity coating liquid is allowed to penetrate into the nonwoven fabric without being pressed with the assistance of the ultrathin film structure, in the case of applying another material with the nonwoven fabric according to the present invention as a base material. More specifically, the combination with other materials can be simplified, and thus, the thickness can be mentioned as a particularly preferable range.

On the other hand, as the thickness is decreased, the nonwoven fabric is softened, and wrinkles and sticking are more likely to occur in the manufacturing process, but as long as the thickness is 0.5 μm or more, the object of the present invention can be achieved without any problem with process passability or actual use.

As described above, the nonwoven fabric according to the present invention can not only achieve space saving as a diaphragm or a base material because of the thickness of the ultrathin film, but also enhance adhesion to other materials because of the flexibility and permeability derived from the ultrathin film, thereby contributing to the achievement of reduction in size and weight and increase in performance for various modules.

The nonwoven fabric according to the present invention is based on the fact that the nonwoven fabric, which is a thin film and yet at the same time, is less likely to be broken in a processing step, can be stably manufactured, which is difficult to achieve by the related art, and the mechanical characteristics are important requirements. As an index of the mechanical characteristics, the nonwoven fabric according to the present invention has high toughness as a second requirement, and the toughness needs to be 0.50 or more.

This value of the toughness is determined as follows.

The nonwoven fabric according to the present invention is cut into predetermined dimensions (100 mm in length × 10 mm in width), and the value of the maximum point load is measured in units of N under predetermined conditions (initial length: 50 mm, sample width: 10 mm, tensile speed 100 mm/min) with the use of a tensile tester (for example, Tensilon UTM-III-100 manufactured by ORIENTEC CORPORATION). This measurement is performed five times for each of samples cut out in the manufacture direction (MD) and cross direction (CD) of the nonwoven fabric, and the arithmetic mean thereof is rounded off to two decimal places to obtain a value defined as the tensile strength (N/cm) of the nonwoven fabric according to the present invention.

In addition, the amount of strain at the maximum point load is measured in units of %, and the arithmetic mean of

the values measured in the MD and the CD is rounded off to one decimal place to obtain a value defined as the tensile elongation (%) of the nonwoven fabric according to the present invention.

Further, the ten sample pieces (100 mm in length × 10 mm in width) in total in the respective directions, cut out for the tensile test, are each weighed in advance to calculate the weight (g) per unit area ($m^2$), and the arithmetic mean thereof is rounded off to one decimal place to obtain a value defined as the basis weight ($g/m^2$) of the nonwoven fabric according to the present invention.

From the obtained tensile strength and elongation and basis weight, the specific tensile strength and toughness are calculated by the following formula, and rounded off to two decimal places to obtain the specific tensile strength and toughness of the nonwoven fabric.

$$\text{Specific Tensile Strength } (N \cdot m^2/\cdot cm) = \text{Tensile Strength } (N/cm)/\text{Basis Weight } (g/m^2)$$

$$\text{Toughness} = \text{Specific Tensile Strength } (N \cdot m^2/\cdot cm) \times \text{Tensile Elongation}^{1/2}\ (\%^{1/2})$$

The toughness referred to in the present invention refers to the tensile energy absorption per unit fiber amount constituting the nonwoven fabric, and in the case of a thin-film nonwoven fabric where defects that act as break starting points are likely to appear due to the small constituent fiber amount, the toughness tends to be extremely decreased.

As long as the toughness is 0.50 or more, the nonwoven fabric is allowed to absorb twice or more as much tensile energy as the thin-film nonwoven fabric formed with the use of ultrafine fibers, and is less likely to be broken due to tension in the processing step or contact with other members, and is capable of satisfying favorable handleability.

In addition, from this viewpoint, the handleability of the nonwoven fabric is improved as the toughness is increased, and as long as the toughness is 1.00 or more, the nonwoven fabric can be stably processed because of being less likely to be broken even in a roll-to-roll process in which tension fluctuation and friction with other members are likely to occur, and the toughness can be mentioned as a preferable range.

Furthermore, the toughness of 1.20 or more is a more preferable range in the present invention, and as long as the toughness falls within the range, the nonwoven fabric can be processed with sufficient processing tension applied in a roll-to-roll process, and wrinkles and folded ends at the time of process passage can be reduced, and thus, the toughness can be mentioned as a more preferable range.

Further, the toughness of 1.50 or more is a particularly preferable range of the present invention, and the toughness falls within the range, the nonwoven fabric can withstand enough the high processing tension and friction applied at the time of speeding up a roll-to-roll process, and thus, the toughness can be mentioned as a particularly preferable range.

As the toughness is increased, the nonwoven fabric is allowed to absorb higher tensile energy, which is preferable, but in view of the structure of the nonwoven fabric in which fibers are adhesively fixed to each other, the toughness has a substantial upper limit of 4.0 or less.

As described above, the nonwoven fabric according to the present invention has excellent mechanical characteristics while being a thin film, and solves the problem of poor processability such as breakage in the process, which is a problem in thin-film nonwoven fabrics according to the related art, and furthermore, the excellent mechanical characteristics enable the formation of an ultrathin-film nonwoven fabric that is extremely low in basis weight, which is difficult in the related art due to insufficient mechanical characteristics.

This reduction in thickness is greatly affected by the basis weight, which is the constituent fiber amount of the nonwoven fabric, and the porosity, and the basis weight is preferably low from the viewpoint of producing the effect created by the thin film while sufficiently achieving the function for which the porous structure is utilized.

As long as the basis weight is 15.0 $g/m^2$ or less, such a thin-film nonwoven fabric that has a thickness of 30.0 μm or less can be obtained while sufficiently utilizing the porous structure of the nonwoven fabric, and the basis weight can be mentioned as a preferable range.

In addition, as long as the basis weight is 5.0 $g/m^2$ or less, an ultrathin-film nonwoven fabric of 10.0 μm or less in thickness can be formed for which the porous structure is utilized, and the basis weight can be mentioned as a more preferable range.

Furthermore, as long as the basis weight is 3.0 $g/m^2$ or less, an advanced porous structure can be obtained even with an ultrathin film of 5.0 μm or less in thickness, from which an effect of improving the adhesion to other materials and the permeability is expected, and the basis weight can be mentioned as a particularly preferable range.

Further, from the viewpoint of achieving a high function with utilization of the porous structure of the nonwoven fabric, the porosity is preferably high, and the porosity herein is calculated from the thickness and the basis weight by rounding off to one decimal place with the use of the following formula. Further, the true density is calculated by extrapolating the density of the material.

$$\text{Apparent Density (g/cm}^3\text{) = Basis Weight (g/m}^2\text{) /Thickness (}\mu\text{m)}$$

$$\text{Porosity (\%) = (1 - Apparent Density (g/cm}^3\text{)/True Density (g/cm}^3\text{))} \times 100$$

As long as the porosity is 50% or more, at least half of the volume can be used for filtration/separation and impregnation with other materials, and with utilization of this large volume of inter-fiber voids, advanced functions, which are difficult to achieve with other porous materials, are easily achieved, and the porosity can be mentioned as a preferable range.

In addition, the porosity is more preferably 55% or more, and as long as the porosity falls within the range, in a case where the nonwoven fabric is impregnated with particles, a resin, or the like, the particles or resin in a sufficient amount can be supported because of the high porosity, and the performance of the impregnation component can be delivered while the nonwoven fabric is a base material.

Furthermore, the porosity of 60% or more allows, in the case of assuming impregnation with particles, a resin, or the like, the particles or the resin to be easily spread into every corner of the nonwoven fabric, and even in a case where the nonwoven fabric is processed by dipping without applying any high pressure, causes the performance of the impregnation component to be delivered well, and thus, the porosity can be mentioned as a particularly preferable range.

As the porosity is increased, a larger amount of particles and resin is allowed to be supported, which is preferable, but in view of the structure of the nonwoven fabric in which the fibers are bonded to each other to maintain the structure, the porosity has a substantial upper limit of 95% or less.

The nonwoven fabric according to the present invention has excellent mechanical properties while being a thin film, and when main fibers that form the skeleton of the nonwoven fabric are firmly and uniformly bonded, can suppress deformation and destruction of the nonwoven fabric structure against external forces, and has excellent dimensional stability in the process. More specifically, from the viewpoint of more firmly bonding the fibers constituting the nonwoven fabric to each other and preventing dimensional changes of the nonwoven fabric due to deformation and destruction of the bonded parts, it is preferable for each of the main fibers to be bonded in a large area, and as an index thereof, the bonded area per fiber cross-sectional area in a fiber constituting the nonwoven fabric is preferably 3.00 or more.

The bonded area per fiber cross-sectional area is determined as follows.

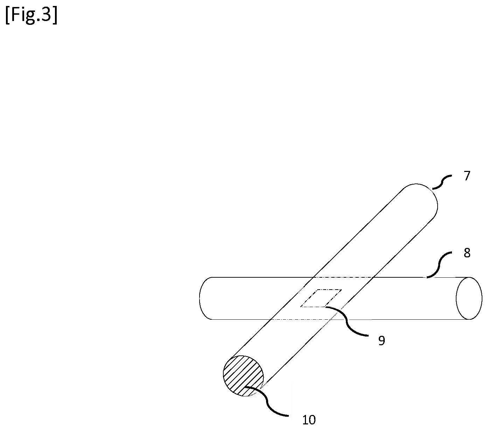

A cross section of the nonwoven fabric according to the present invention is cut and then cut out with a razor or the like, and the cross section is photographed with a scanning electron microscope (SEM) or the like at a magnification at which a transverse section of a fiber (main fiber) including a fiber skeleton can be observed. The constituent fibers of the nonwoven fabric have a mixture of the main fibers and binder fibers that serve to bond the main fibers, but the binder fibers are typically softened and fluidized in the manufacturing process, and the fiber skeletons are deformed or lost, and thus, the main fibers and the binder fibers can be distinguished from each other by the form of the cross section. For a transverse section (see Fig. 3) of one of the main fibers that are present in the photographed image, a fiber cross-sectional area is measured in units of $\mu m^2$ by specifying a cross-sectional outer periphery with the use of image analysis software. This measurement is performed for fifty fibers, and the arithmetic mean thereof is rounded off to two decimal places to obtain a value defined as the fiber cross-sectional area according to the present invention.

Subsequently, in the same manner as described above, a part where the main fiber and the binder fiber (the fiber skeleton may be disappeared) are bonded in a substantially orthogonal manner is specified (see Fig. 3), and photographed at a magnification at which the part can be observed. In this regard, the fiber cross section may be etched with an alkaline solution or the like for clarifying the contrast of the interface between the main fiber and the binder fiber and efficiently performing the measurement described later. The length of a part where one main fiber is bonded to one binder fiber in a direction perpendicular to the fiber axis of the main fiber is measured in units of $\mu m$ with the use of image analysis software, and this value is defined as a bonded length. In the calculation of the bonded area referred to in the present invention, it is assumed that a bonded part that has the same length as the bonded length in the direction perpendicular to the fiber axis of the main fibers is also formed in the fiber axis direction of the main fibers, and the above-described bonded length is squared to calculate the bonded area in units of $\mu m^2$. This measurement is performed for fifty fibers, and the arithmetic mean thereof is rounded off to two decimal places to obtain a value defined as the bonded area according to the present invention. The value calculated from the obtained fiber cross-sectional area and bonded area by the following equation and rounded off to two decimal places is defined as the bonded area per fiber cross-sectional area according to the present invention.

$$\text{Bonded Area per Fiber Cross-sectional Area = Bonded Area (}\mu\text{m}^2\text{)/Fiber Cross-sectional Area (}\mu\text{m}^2\text{)}$$

As long as the bonded area per fiber cross-sectional area is 3.00 or more, the main fiber that forms the skeleton of the nonwoven fabric is firmly bonded in an extensive area by the binder fiber, and even when a more-than-expected

external force is applied due to fluctuation in processing tension, the nonwoven fabric structure is allowed to have excellent dimensional stability without being deformed, and the bonded area can be mentioned as a preferable range.

In addition, the bonded area per fiber cross-sectional area is more preferably 5.00 or more, and as long as the bonded area falls within the range, even when an external force is applied in a concentrative manner to a part of the nonwoven fabric due to contact with another member, the bonded point is less likely to be destroyed, the external force can be propagated throughout the nonwoven fabric, and the nonwoven fabric structure thus has more excellent dimensional stability.

Furthermore, the bonded area per fiber cross-sectional area is 10.00 or more, thereby allowing, even when a sudden external force is applied, the external force to be uniformly dispersed throughout the nonwoven fabric without deformation or destruction of the bonded point, and thus, the bonded area can be mentioned as a particularly preferable range.

As the bonded area per fiber cross-sectional area is increased, the bonded point becomes firmer, which is preferable, but the bonded area per fiber cross-sectional area has a substantially upper limit of 500.00 or less.

As described above, from the viewpoint of uniformly dispersing the external force throughout the nonwoven fabric, the uniformity of the nonwoven fabric structure, such as the density nonuniformity distribution of the constituent fibers, also has an influence in addition to the firm bonding derived from the large bonded area, preferably without any visible macroscopic fiber density distribution, such as pinhole.

In particular, in the thin nonwoven fabric as in the present invention, through-holes on a μm scale, which are regions that have no fiber in the thickness direction of the nonwoven fabric, are formed due to the small constituent fiber amount, and variations in the through-hole size also have a significant influence on the stress concentration of the nonwoven fabric. For this reason, the nonwoven fabric is preferably uniform in through-hole size, and specifically, the nonwoven fabric preferably has a through-hole range of 120 μm or less.

The through-hole range of the nonwoven fabric is determined as follows.

The surface of the nonwoven fabric according to the present invention is photographed with a scanning electron microscope (SEM) or the like at a magnification at which through-holes can be observed at hundred or more points. It is to be noted that the through-hole herein means a region that has no fiber in the thickness direction in observation from the surface of the nonwoven fabric, and has a periphery surrounded by the fibers. For through-holes at hundred points present in the photographed image, the equivalent circle diameter is measured as an integer in units of μm with the use of image analysis software WINROOF2015 manufactured by MITANI CORPORATION. The same operation is performed for five images, and the value obtained by subtracting the minimum value of the obtained equivalent circle diameter from the maximum value thereof is defined as the through-hole range according to the present invention. It is to be noted that when there is no through-hole due to a large constituent fiber amount or the like, the through-hole range is not calculated.

As long as the through-hole range of the nonwoven fabric is 120 μm or less, the microscopic nonwoven fabric structure is even kept from being deformed, without any stress concentration around coarse through-holes when an external force is applied to the nonwoven fabric, and thus, the through-hole range can be mentioned as a preferable range.

In addition, the through-hole range of the nonwoven fabric is 80 μm or less, and as long as the through-hole range falls within the range, even when an external force is applied in a concentrative manner to a part of the nonwoven fabric due to contact with another member, the external force can be uniformly borne by fibers around large and small through-holes, and the nonwoven fabric thus has more excellent dimensional stability. Furthermore, the through-hole range of the nonwoven fabric is 50 μm or less, thereby allowing, even when a sudden external force is applied, the external force to be uniformly dispersed throughout the nonwoven fabric structure without deformation thereof, and thus the through-hole range can be mentioned as a particularly preferable range.

As the through-hole range of the nonwoven fabric is smaller, the through-hole size becomes more uniform, which is preferable, but in view of the structure of the nonwoven fabric composed of fibers randomly spread, the through-hole range of the nonwoven fabric has a substantial lower limit of 1 μm or more.

In addition, from the viewpoint of enhancing favorable process passability and high adhesion to other materials, the surface of the nonwoven fabric is preferably smooth, and as an index thereof, the arithmetic mean roughness (Ra) of the nonwoven fabric surface is preferably 7.00 μm or less.

The arithmetic mean roughness (Ra) herein is determined as follows. More specifically, the nonwoven fabric surface is observed with a laser microscope (VK-X200 manufactured by KEYENCE CORPORATION), and measured in accordance with JIS B 0601:2013 with the use of analysis software (VK-H1XA manufactured by KEYENCE CORPORATION). This is performed at arbitrary five points per sample, and the arithmetic mean thereof is rounded off to two decimal places to obtain a value defined as the arithmetic mean roughness (Ra).

The arithmetic mean roughness (Ra) of the nonwoven fabric according to the present invention is preferably 7.00 μm or less, and as long as the arithmetic mean roughness (Ra) falls within the range, the surface has no coarse irregularities, without any catching at the surface, and thus, the nonwoven fabric has favorable process passability, and furthermore, in combining the nonwoven fabric with other materials, high-quality integration is enabled with the nonwoven fabric adhesively combined without any gap.

Further from this viewpoint, the arithmetic mean roughness (Ra) of the nonwoven fabric surface is more preferably 5.00 μm or less, the adhesion at the time of combining the nonwoven fabric as a base material with other materials is further enhanced, and the durability against peeling over time is also excellent.

As the arithmetic mean roughness (Ra) of the nonwoven fabric surface is reduced, the adhesion at the time of combining the nonwoven fabric with other materials is further enhanced, which is preferable, but from the viewpoint of the structure of the nonwoven fabric formed composed of fibers randomly spread, the arithmetic mean roughness (Ra) of the nonwoven fabric surface has a substantial lower limit of 0.50 μm or more.

The features such as the thickness and excellent mechanical characteristics of the ultrathin film of the nonwoven fabric according to the present invention can be achieved by the effective action of the shape of the constituent fibers, and the nonwoven fabric according to the present invention preferably includes, as a fiber (main fiber) constituting the nonwoven fabric, at least one or more types of flat fibers with a flatness of 3 or more, which is a value obtained by dividing the major axis length of a fiber transverse section by the minor axis length thereof.

The flat fiber herein refers to a fiber that has a flat fiber transverse section, and the flat shape refers to a shape that has a difference between the major axis length and the minor axis length, such as a rectangular shape or an elliptical shape. In addition, the degree of flatness is defined as a flatness that is a value obtained by dividing the major axis length by the minor axis length.

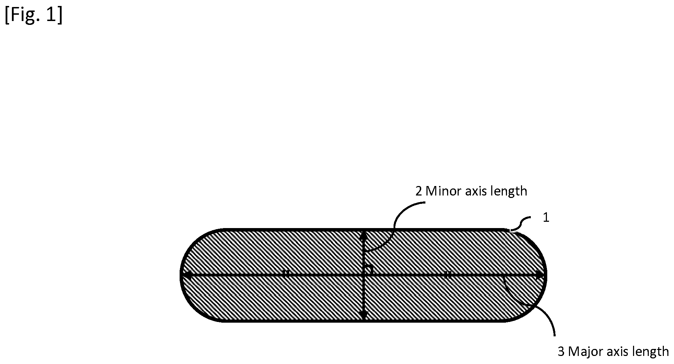

The flatness referred to in the present invention is determined as follows (see also Fig. 1).

More specifically, the nonwoven fabric is embedded in an embedding agent such as an epoxy resin, a fiber transverse section is cut with a microtome fitted with a diamond knife, and the transverse section is photographed with a scanning electron microscope (SEM) or the like at a magnification at which the cross section can be identified. For the transverse section of a single fiber present in the photographed image, the maximum length of the cross section is measured with the use of image analysis software, and this value is rounded off to two decimal places in units of μm as the length of the single fiber in the major axis direction thereof. Subsequently, the length is measured at which a line segment that is orthogonal to the maximum-length line segment at the midpoint of the maximum length intersects the fiber cross section, and this value is rounded off to two decimal places in units of μm as the minor axis length of the single fiber. With the use of the major axis length and the minor axis length, the flatness of the single fiber is calculated by the following formula.

Flatness = Major Axis Length (μm)/Minor Axis Length (μm)

The measurements mentioned above are performed for hundred fibers to calculate the flatness of each fiber, and the arithmetic mean thereof is rounded off to the whole number to obtain a value defined as the flatness according to the present invention.

The nonwoven fabric according to the present invention preferably includes at least one or more types of flat fibers with the flatness of 3 or more. When fibers are deposited as a nonwoven fabric, the cross-sectional directions of the fibers are naturally aligned due to the cross-sectional shape anisotropy of the fibers, and the minor axis direction of the fiber cross section is preferentially oriented in the thickness direction of the nonwoven fabric, thereby promoting reduction in thickness. Furthermore, the flat fibers overlap with each other in the cross-sectional direction aligned, thereby causing the overlapping fibers to come into contact with each other as a "plane" in a large area, and producing a strong binding force, which is difficult to achieve with point contact between normal round cross-section fibers.

Further from this viewpoint, the flatness of the flat fiber constituting the nonwoven fabric is increased, thereby remarkably achieving the selective orientation effect and contact area increase effect derived from the cross-sectional shape. Accordingly, including one or more types of flat fibers with the flatness of 8 or more causes the minor axis direction of the flat cross section to be highly aligned in the thickness direction of the nonwoven fabric, and allows expectations for remarkable reduction in thickness and increase in contact area, and thus, the flatness can be mentioned as a more preferable range.

Furthermore, in the case of including one or more types of flat fibers with the flatness of 15 or more, the fibers spread while aligning the directions have lengths increased for the planar direction of the nonwoven fabric, and thus, the binding force between adjacent fibers is increased, thereby increasing the strength of the nonwoven fabric in both the manufacture direction and the cross direction. Furthermore, in the case of selecting wet papermaking as a method for manufacturing a nonwoven fabric, entanglement between fibers at the time of stirring a papermaking stock solution is significantly suppressed by the anisotropy of the cross-sectional shape, and the uniformity and quality of the nonwoven fabric can be kept high, such as the operational stability of the papermaking process being drastically increased. Thus, the flatness of 15 or more can be mentioned as a particularly preferable range in the present invention.

In addition, as the flatness of the cross section is increased, bending or cracking tends to become more likely to occur in the major axis direction of the cross section when an external force is applied in the processing step, but as long as the flatness is 500 or less, the object of the present invention can be achieved without any problem with actual use.

Further, from the viewpoints of reducing the thickness of the nonwoven fabric and enhancing the adhesion to

other materials, the minor axis lengths of the above-mentioned flat fibers in the transverse section are preferably short, and the flat fibers constituting the nonwoven fabric according to the present invention are preferably 2.00 μm or less in minor axis length.

With the reduced minor axis lengths of the flat fibers for use in the nonwoven fabric according to the present invention, the thickness occupied by one fiber in the case of selectively orienting the flat cross section is reduced, thereby not only making it easier to form a thinner nonwoven fabric, but also softening the fibers themselves in the minor axis direction, and thus, the adhesion to other materials can be further enhanced by a synergistic effect derived from the reduction in the thicknesses of both the constituent fibers and the nonwoven fabric.

As long as the minor axis lengths of the flat fibers for use in the nonwoven fabric according to the present invention are 2.00 μm or less, an ultrathin nonwoven fabric is easily formed because of the small thickness occupied by one fiber, and furthermore, each of the fibers is flexibly deformed by the softening of the fiber itself, and thus, the adhesion in the case of combination with other materials can be enhanced.

In addition, as long as the minor axis lengths of the flat fibers for use in the nonwoven fabric according to the present invention are 1.00 μm or less, even an ultrathin nonwoven fabric of less than 10 μm, which is difficult to achieve with normal fibers, can be easily formed, and the remarkable softening of the fibers allows, even in a local region of the fiber cross section, the nonwoven fabric to adhesively follow the forms of other materials to be combined, and thus, the minor axis lengths can be mentioned as a more preferable range of the present invention.

Furthermore, as long as the minor axis lengths of the flat fibers for use in the nonwoven fabric according to the present invention are 0.70 μm or less, an ultrathin film nonwoven fabric of less than 5 μm in thickness can also be easily formed, and furthermore, the minor axis lengths of the flat fibers on a submicron scale cause intermolecular interaction such as van der Waals force to act, thereby allowing the nonwoven fabric to be highly adhesive to a fine and complicated form, and thus, the minor axis lengths can be mentioned as a particularly preferable range in the present invention.

On the other hand, when the minor axis lengths of the flat fibers are extremely small, the fibers become more likely to be broken in the manufacturing process, but as long as the minor axis lengths of the flat fibers are 0.05 μm or more, there is no problem with the manufacturing process and the actual use of the nonwoven fabric, and the minor axis lengths can be mentioned as a substantial lower limit according to the present invention.

Further, as fibers that form the nonwoven fabric according to the present invention, flat fibers with the flatness and minor axis length mentioned above are preferably used for both the main fibers and the binder fibers. The use of the flat fibers for both the main fibers and the binder fibers causes the both fibers to closely overlap with each other in the cross-sectional directions aligned, and the binder fibers are softened to fluidized, thereby bonding the fibers to each other as a "plane" in a large area, and extremely firm bonding and fixing can be achieved.

In addition, from the viewpoint of achieving high functionalization with the maximum utilization of the porous structure of the nonwoven fabric according to the present invention, the shape of the fiber transverse section preferably has a distribution within a certain range, and the flat fibers for use in the nonwoven fabric according to the present invention preferably have variations in minor axis length.

The variation in minor axis length in the present invention is obtained by calculating the arithmetic mean and the standard deviation with the use of the minor axis lengths of the hundred fibers measured above, and rounding off the variation coefficient obtained by dividing the standard deviation by the arithmetic mean, to the closest whole number in units of %.

The presence of the minor axis lengths with an appropriate distribution causes the shapes of the fiber transverse sections not to coincide with each other, and thus, in the case of spreading fibers as a nonwoven fabric, the flat fibers are each moved differently, and more uniformly dispersed. From the foregoing viewpoint, in the flat fibers for use in the nonwoven fabric according to the present invention, the variation in minor axis length is preferably 10% or more, and the variation within the range causes each of the flat fibers to move differently to make the flat fibers less likely to be unevenly distributed in the sheet forming process, thereby making the flat fibers more uniformly dispersed.

In addition, when the variation in minor axis length is 20% or more, the bending behaviors and the like of the fibers in the sheet forming process are also different among the fibers, and thus, the flat fibers as the main fibers are less likely to overlap with each other, the main fibers and the binder fibers are uniformly bonded, and effective bonding is achieved.

Further from this viewpoint, as the variation in minor axis length is larger, the flat fibers are more uniformly dispersed, but when an external force is applied in the manufacturing process or the like, the flat fibers tend to become more likely to be broken due to the excessively short minor axis lengths. Accordingly, the variation in minor axis length is preferably 50% or less, which is a substantial upper limit in the present invention.

In the flat fibers for use in the nonwoven fabric according to the present invention, the flat fibers before being subjected to the sheet forming process can be subjected to fiber opening in a favorable manner by the steric hindrance effect due to the irregularities of the outer periphery in addition to the uniform dispersion effect due to the differences in fiber transverse section for each fiber, thereby easily achieving uniform dispersion of the fibers in the nonwoven fabric, and thus, the degree of irregularity in the fiber transverse section is preferably 20% or more.

The degree of irregularity referred to in the present invention is measured by the following method. First, with the

use of the photographed image of the fiber cross section, the length at which a line segment that is orthogonal to the maximum-length line segment intersects the fiber cross section is measured at each of the points obtained by dividing the maximum length of the cross section into ten equal parts, the arithmetic mean and the standard deviation of the lengths at the ten points are calculated, and the standard deviation is divided by the arithmetic mean, and then rounded off to the closest whole number in units of percentage to obtain a value defined as the degree of irregularity of the single fiber. The same measurement is performed for ten fiber cross sections, and the arithmetic mean of the calculated degrees of irregularity of the ten fibers is defined as the degree of irregularity according to the present invention. The degree of irregularity is 20% or more, thereby making it easier to make the flat fibers subjected to fiber opening one by one from minute voids between the fibers as starting points, and making it easier to achieve uniform dispersion in the sheet forming process.

In addition, the high degree of irregularity allows the flat fibers to be subjected to fiber opening in a favorable manner, but as a range in which no cracking is caused with a load concentrated on a part of the cross section, the degree of irregularity is 50% or less, which can be mentioned as a substantial upper limit in the present invention.

It is to be noted that while the nonwoven fabric has mechanical characteristics achieved by a bridged structure formed by bonding, frictional force, or the like between adjacent fibers, this bridged structure is a structure such that the fibers present in the nonwoven fabric interact with each other for force transmission, and thus, in the case of the same amount of fibers being present in the nonwoven fabric, as the fiber diameters are smaller, whereas the fiber lengths are larger, the bridged structure is formed to promote the force transmission. More specifically, as the ratio of the fiber length to the fiber diameter is higher, the formation of the bridged structure is more promoted, and as an index thereof, the aspect ratio, which is a value obtained by dividing the fiber length by the minor axis length, can be considered preferably high in the flat fibers for use in the nonwoven fabric according to the present invention.

The aspect ratio referred to in the present invention is determined as follows.

An image of the flat fibers is photographed with a microscope or the like at a magnification at which ten or more fibers whose entire lengths can be measured can be observed. The fiber lengths of ten fibers randomly extracted from the image in which the fibers are photographed are measured. The fiber length herein is a length in the longitudinal direction of one fiber from a two-dimensionally photographed image, and is measured in units of mm with the use of image analysis software. The arithmetic mean of the fiber lengths is rounded off to one decimal place to obtain a value defined as the fiber length according to the present invention. The value obtained by rounding off to the closest whole number in accordance with the following formula with the use of the fiber length and the minor axis length calculated above is defined as the aspect ratio according to the present invention.

$$\text{Aspect Ratio} = \text{Fiber Length } (\mu\text{m})/\text{Minor Axis Length } (\mu\text{m})$$

In the flat fibers for use in the nonwoven fabric according to the present invention, the aspect ratio is preferably 1000 or more, and as long as the aspect ratio falls within the range, a bridged structure is sufficiently formed between the fibers, and the strength as a nonwoven fabric is improved.

In addition, the aspect ratio of the flat fibers for use in the nonwoven fabric according to the present invention is more preferably 2000 or more, and as long as the aspect ratio falls within the range, the nonwoven fabric has not only excellent mechanical characteristics, but also excellent process passability, such as minimized falling of the fibers in the manufacturing process.

As described above, the nonwoven fabric according to the present invention is characterized by having excellent mechanical characteristics even while being a thin film, and examples of applications (fibrous products) in which the characteristics are utilized include material applications such as filters, products for removal of harmful substances, battery separators, and sound absorbing materials, daily applications such as cosmetics, cosmetic masks, and wiping cloths, medical applications such as scaffolding materials for cell culture, artificial blood vessels, and blood filters, and clothing applications such as jackets, skirts, pants, and underclothes.

In particular, in the case of a sheet obtained by filling the inside of the nonwoven fabric according to the present invention as a diaphragm or a base material with a resin or particles, the space saving of the base material not only allows a module to have reduction in size and weight and increase in performance, but the excellent mechanical characteristics of the base material also allows a high-quality module to be stably manufactured. Examples thereof include an adhesive tape obtained by combining the nonwoven fabric according to the present invention as a base material with an adhesive, a polymer electrolyte membrane obtained by combining the nonwoven fabric with a polymer electrolyte, and a functional membrane that has self-standability and flexibility imparted by combining the nonwoven fabric with functional particles.

Furthermore, the employment of a sheet obtained by filling the nonwoven fabric according to the present invention as a base material with a solid electrolyte allows, even in the case of an ultrathin-film base material capable of keeping the ionic conductivity from being decreased, impartation of self-standability and flexibility that can withstand the manufacture of the solid electrolyte, and allowing reduction in size and weight and increase in performance for an all-solid-

state battery.

An example of a method for manufacturing the nonwoven fabric according to the present invention will be described in detail below.

The nonwoven fabric according to the present invention has a feature of having excellent mechanical characteristics while being a thin film, and can take both long-fiber and short-fiber forms. In the manufacturing methods therefor, a spunbonding method, a melt-blowing method, a dry method, a wet method, and the like can be all employed, and if necessary, the methods are allowed to be combined for the manufacture.

In various methods for manufacturing the nonwoven fabric, in order to form the thin-film structure, which is a feature of the nonwoven fabric according to the present invention, a wet method that is good at manufacturing a thin-film nonwoven fabric that is excellent in formation, that is, a wet papermaking method is suitably used, thereby allowing the thin-film structure, which is a feature of the present invention, to be stably formed.

The wet papermaking method herein is a method for manufacturing a nonwoven fabric by papermaking with a papermaking stock solution in which short fibers cut short are dispersed in an aqueous medium. More specifically, main fibers that form the skeleton of a nonwoven fabric, binder fibers that are subjected to heat treatment to bond the short fibers, and the like are put in water, and if necessary, the fibers are disentangled one by one by defiberization or beating, and papermaking is performed with the use of a papermaking stock solution in which various short fibers are uniformly dispersed. Further, in the process of preparing the papermaking stock solution, the dispersibility can be adjusted depending on the amount of the short fibers prepared, the amount of the aqueous medium, the stirring time, and the like, and the dispersion state of various short fibers is preferably prepared.

Further, in order to suppress the aggregation of the short fibers put in water and manufacture a uniform thin-film nonwoven fabric, a dispersant may be contained.

Examples of the dispersant include natural polymers, synthetic polymers, organic compounds, and inorganic compounds. For example, examples of the additive for suppressing the aggregation of the fibers include a cationic compound, a nonionic compound, and an anionic compound, and in particular, when the purpose is to improve the dispersibility, it is preferable to use an anionic compound from the viewpoint of electric repulsive force in the aqueous medium. In the manufacture according to the present invention, the amount of the dispersant added is preferably 0.001 to 10 equivalents with respect to the fibers constituting the nonwoven fabric, and as long as the amount falls within the range, without impairing the processability of the wet papermaking, the dispersibility of the fibers can be improved, and the nonwoven fabric according to the present invention can be manufactured.

For the fibers constituting the nonwoven fabric according to the present invention, fibers manufactured by a conventionally known yarn making method may be applied, but from the viewpoint of productivity, fibers manufactured by a method of utilizing melt spinning are preferably employed.

In the case of manufacturing fibers in melt spinning, desired fibers can be obtained by discharging a polymer in a desired cross-sectional form with the use of a spinneret or a composite spinneret provided with holes in shapes for the purpose.

For the polymer for use in the melt-spinning, melt-moldable polymers can be used, such as a polyethylene terephthalate, a polyethylene naphthalate, a polybutylene terephthalate, a polytrimethylene terephthalate, a polypropylene, a polyolefin, a polycarbonate, a polyacrylate, a polyamide, a polylactic acid, a thermoplastic polyurethane, and a polyphenylene sulfide, and a liquid crystalline polyester, and from among copolymers thereof.

In the case of using the nonwoven fabric for an industrial material, the nonwoven fabric preferably has a certain degree of heat resistance, and polycondensation polymers typified by a polyester and a polyamide have high melting points. and are suitable for use in the present invention. In the case of being applied to a diaphragm, a base material, or the like, a polyester that has a high melting point is preferably used because of being combined with another material by heating. Furthermore, in the case of being applied as a diaphragm or a base material to an application that requires chemical resistance, a polyphenylene sulfide is excellent in heat resistance in actual use in addition to chemical resistance, and thus can be preferably used.

Further, the polymer for use in the present invention may contain various additives such as: inorganic substances such as a titanium oxide, silica, and a barium oxide; coloring agents such as carbon black, a dye, and a pigment; flame retardants, fluorescent whitening agents; antioxidants; and ultraviolet absorbers.

In the case of employing a wet papermaking method in the method for manufacturing the nonwoven fabric according to the present invention, various short fibers for use in a papermaking stock solution are preferably 0.3 to 30.0 mm in fiber length, and as long as the fiber length falls within the range, the dispersibility in the papermaking stock solution is maintained, thereby allowing a nonwoven fabric that is favorable in formation to be obtained.

The fiber lengths of the short fibers can be appropriately adjusted depending on the intended use. In general, as the fiber lengths are increased, the contact length between the short fibers is increased, and the mechanical characteristics and the dimensional stability of the nonwoven fabric tend to be improved, but on the other hand, the short fibers tend to be entangled and then easily aggregated in stirring in the fiber papermaking stock solution, and thus, the fiber lengths may be adjusted depending on the specifications and expected designs of the short fibers to be mixed with the

papermaking stock solution.

Regarding the main fibers and the binder fibers for use in the nonwoven fabric according to the present invention, the fiber lengths are more preferably 1.0 to 10.0 mm, because of manufacturing a high-quality nonwoven fabric with the papermaking stock solution made uniform without agglomeration, and because of also aiming at excellent mechanical characteristics as a nonwoven fabric and dimensional stabilization in the process. Further from this viewpoint, the fiber lengths are particularly preferably 2.0 to 5.0 mm. As long as the fiber lengths fall within the range, the short fibers are not aggregated with each other even in common papermaking equipment in which a shear force is generated in the process, and the short fibers are less likely to be caught in a papermaking net, and thus, the effect of improving the strength with the increased contact length between the short fibers is maximized, thus allowing the process passability to be made more stable.

In particular, in the nonwoven fabric according to the present invention, the use of flat fibers allows a balance to be achieved between the minimized fiber diameter and the increased fiber length, which have failed to be achieved with conventional materials, thereby allowing very favorable process passability to be achieved even by wet papermaking with an extremely low basis weight, which has been conventionally difficult to achieve.

The main fibers and the binder fibers are each not limited to one type fiber, and may include two or more types of fibers, and the mixing ratios of the main fibers and the binder fibers may be adjusted within the range of 5% to 95% by weight depending on the intended use and required characteristics of the nonwoven fabric. Further, the binder fibers are softened and fluidized, thereby causing the fibers to be firmly bonded to each other to improve mechanical characteristics, but the softened and fluidized binder fibers block the voids between the fibers, and thus, the mixing ratio of the binder fibers is preferably 10% to 60% by weight from the viewpoint of achieving a balance between the mechanical characteristics and the porous structure.

It is to be noted that the main fibers preferably have a softening temperature higher than the binder fibers, and are preferably fibers sufficiently crystallized with a high degree of crystallinity. The main fibers are fibers with a high degree of crystallinity, thereby causing, when binder fibers composed of a polymer that has the same composition are used in an amorphous state, only the binder fibers to be softened and fluidized to allow the main fibers to be firmly bonded to each other while the main fibers act as a tough skeleton material of the sheet-shaped product without being softened.

In addition, for the main fibers and the binder fibers, the fiber diameters and cross-sectional shapes thereof can be appropriately selected for any purpose, and the main fibers and the binder fibers are both flat fibers, thereby allowing the smooth formation of a special nonwoven fabric structure that can achieve a high level of balance between the reduction in thickness and the mechanical characteristics. In particular, flat fibers each with the flatness of 3 or more and the minor axis length of 2.00 um or less are employed for both the main and binder fibers, thereby causing the flat fibers to overlap with each other in cross-sectional directions aligned, and allowing the manufacture of a nonwoven fabric that has a high level of combination of a thin film and mechanical characteristics.

The flat fibers with the flatness of 3 or more and the minor axis length of 2.00 μm or less herein may be difficult to stably manufacture in conventional melt spinning with a spinneret simply provided with non-circular holes, because the molten polymer discharged from the spinneret tends to become close to a circular shape due to surface tension.

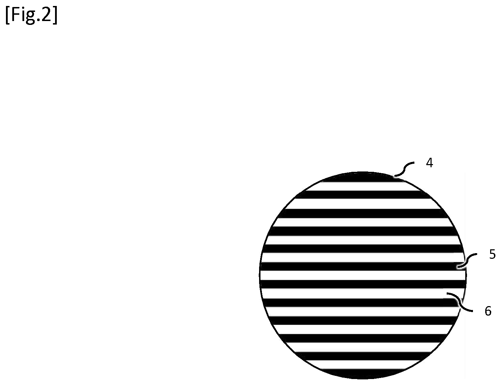

For this reason, in the present invention, a method is suitably employed in which a multilayer laminated fiber (Fig. 2) that has a poorly soluble polymer and an easily soluble polymer laminated in multiple layers in a fiber cross section is produced once by yarn-making, and the easily soluble polymer is dissolved and removed from the multilayer laminated fiber to collect fibers. The multilayer laminated fiber herein means a fiber that has a laminated structure that has two or more types of polymers alternately or randomly laminated in a cross section, and the laminated structure may be not only a structure that has the same direction of lamination in the fiber transverse section, but also a structure obtained by radial lamination, concentric lamination, lamination in which the direction of lamination is irregularly changed, or a combination thereof.

For this multilayer laminated fiber, in order to form a laminated structure for generating stable flat fibers, it is preferable to once form a cross section that has a poorly soluble polymer and an easily soluble polymer stably laminated in multiple layers, and the polymer constituting the multilayer laminated fiber preferably has high affinity.

From the foregoing viewpoint, it is preferable to use, as a combination of polymers constituting the multilayer laminated fiber in the present invention, a polyethylene terephthalate copolymerized with 5 mol% to 15 mol% of a sodium 5-sulfoisophthalate, and a polyethylene terephthalate copolymerized with 5 wt% to 15 wt% of a polyethylene glycol that has a weight average molecular weight of 500 to 3000 in addition to the above-described sodium 5-sulfoisophthalate for an easily soluble component, and a polyethylene terephthalate for a poorly soluble component.

In particular, the use of a polyester copolymerized with a polyethylene glycol and a sodium sulfoisophthalate alone or in combination as an easily soluble component allows flat fibers to be manufactured stably from the viewpoints of spinnability and easy dissolution in a low concentration aqueous solvent, and also from the viewpoints, the above-mentioned combination of polymers can be mentioned as a more preferable form for achieving the present invention.

In the present invention, it is also possible to use, directly for wet papermaking, the multilayer laminated fiber from which the easily soluble component is dissolved, or it is also possible to use flat fibers that are, after the easily soluble

component is dissolved from the multilayer laminated fiber, separated by filtering or the like, washed with water, dried, and the like, and then dispersed again in an aqueous medium. In addition, it is also possible to adjust the pH of the medium with the addition of an acid or an alkali or to dilute the medium with water for use in consideration of higher-order processing to be used and handleability therefor.

The flat fibers generated from the multilayer laminated fiber mentioned above show, due to the fiber transverse section with advanced shape anisotropy such as a small minor axis length and a large major axis length, excellent dispersibility even under a wide range of conditions from low shearing to high shearing, and cause less entanglement between the flat fibers, and thus, form a papermaking stock solution with excellent uniformity.

The papermaking stock solution prepared with the various short fibers described above is diluted to a constant concentration, and then dehydrated with an inclined wire, a cylinder, or the like to form a nonwoven fabric. Examples of the apparatus for use in the papermaking include a cylinder paper machine, a fourdrinier paper machine, an inclined tanmo paper machine, or a paper machine that has a combination thereof. In the papermaking process, the accumulation of fibers in water filtration is controlled by adjusting the papermaking speed, the fiber amount, and the amount of aqueous medium depending on the desired basis weight, in addition to the dispersibility of the fibers in the papermaking stock solution. The wet paper formed herein undergoes drying and heat treatment processes, and is then subjected to water removal and bonding with the binder fibers, thereby manufacturing a nonwoven fabric according to the present invention. As this drying method, a method of using hot air ventilation (air through) or a method of bringing the wet paper into contact with a heat rotating roll (such as a yankee dryer or a heat calender roll) is suitably employed from the viewpoint that the drying of the wet paper and the heat bonding with the binder fibers can be performed simultaneously. The obtained nonwoven fabric undergoes a thermocompression bonding process, thereby more firmly bonding the binder fibers to improve the mechanical characteristics of the nonwoven fabric. As this thermocompression bonding method, a method of using a heating press machine or a heat calender roll (such as a super calender or a soft calender) is suitable employed from the viewpoint of capable of processing with high accuracy.

As a method for impregnating the obtained nonwoven fabric with a resin, particles, or a solid electrolyte for integration, various coating methods such as a dip coater, a die coater, and a spray coater can be applied depending on the viscosity, coating amount, and coating speed of the coating liquid of the materials.

## EXAMPLES

The nonwoven fabric according to the present invention will be specifically described with reference to examples below.

The following evaluations were performed for examples and comparative examples.

### A. Thickness

The thickness of the nonwoven fabric was measured in units of mm with the use of a dial thickness gauge DGN-250B (gauge head shape: 25mmφ, graduation: 0.0001 mm, measuring force: 1.2 N or less) manufactured by PEACOCK Co., Ltd. The measurement was performed at arbitrary five points per sample, and the arithmetic mean thereof was converted into unit of μm and then rounded off to one decimal place to obtain a value defined as the thickness of a nonwoven fabric.

### B. Basis Weight

Five sample pieces of 100 mm in length × 10 mm in width were cut out with respect to each of the manufacture direction (MD) and cross direction (CD) of the nonwoven fabric, and each weighed with the use of an electronic balance GR202 (graduation: 0.01 mg) manufactured by A&D Company, Limited, and the weight (g/m$^2$) per unit area was calculated. The arithmetic mean thereof was rounded off to one decimal place to obtain a value defined as the basis weight (g/m$^2$).

### C. Porosity

The value obtained by rounding off to one decimal place in accordance with the following formula with the use of the above-calculated thickness and basis weight of the nonwoven fabric was defined as the porosity.

$$\text{Apparent Density (g/cm}^3\text{)} = \text{Basis Weight (g/m}^2\text{)} / \text{Thickness } (\mu\text{m})$$

$$\text{Porosity (\%)} = (1 - \text{Apparent Density (g/cm}^3\text{)} / \text{True Density (g/cm}^3\text{)}) \times 100$$

Further, the true density of 1.38 (g/cm$^3$) was used for the polyethylene terephthalate and polyphenylene sulfide mentioned in the examples.

D. Toughness

With the use of the sample pieces (100 mm in length × 10 mm in width) cut out in the calculation of the basis weight, a tensile test was performed under the conditions of initial length: 50 mm, sample width: 10 mm, and tensile speed: 100 mm/min with a tensile tester Tensilon UTM-III-100 manufactured by ORIENTEC CORPORATION, and the value of the maximum point load was measured in units of N. This measurement was performed for the five samples cut out in each of the MD and CD of the nonwoven fabric, and the arithmetic mean thereof was rounded off to two decimal places to obtain a value defined as the tensile strength (N/cm) of the nonwoven fabric. In addition, the amount of strain at the maximum point load was measured in units of %, and the arithmetic mean thereof was rounded off to one decimal place to obtain a value defined as the tensile elongation (%) of the nonwoven fabric. The value obtained by rounding off to two decimal places in accordance with the following formula with the use of the obtained tensile strength and elongation and basis weight was defined as the toughness of the nonwoven fabric.

Specific Tensile Strength (N·m$^2$/g·cm) = Tensile Strength (N/cm)/Basis Weight (g/m$^2$)

Toughness = Specific Tensile Strength (N·m$^2$/·cm) × Tensile Elongation$^{1/2}$ (%$^{1/2}$)

E. Bonded Area per Fiber Cross-sectional Area

A cross section of the nonwoven fabric was cut and then cut out with a razor or the like, and photographed with a scanning electron microscope (SEM) S-5500 manufactured by Hitachi High-Technologies Corporation at a magnification at which a transverse section of a fiber (main fiber) including a fiber skeleton could be observed. For one of the main fibers that were present in the photographed image, the fiber cross-sectional area was measured in units of μm$^2$ by specifying a cross-sectional outer periphery with the use of image analysis software WINROOF2015 manufactured by MITANI CORPORATION. This measurement was performed for fifty fibers, and the arithmetic mean thereof was rounded off to two decimal places to obtain a value defined as the fiber cross-sectional area. In the same manner, a part where the main fiber and the binder fiber (the fiber skeleton may be disappeared) were bonded in a substantially orthogonal manner was specified, and photographed at a magnification at which the part could be observed. The length of a part where one main fiber was bonded to one binder fiber in a direction perpendicular to the fiber axis of the main fiber was measured in units of μm with the use of the image analysis software mentioned above, and this value is defined as a bonded length. It was assumed that a bonded part that had the same length as the bonded length in the direction perpendicular to the fiber axis of the main fibers was also formed in the fiber axis direction of the main fibers, and the square value of the bonded length was calculated in units of μm$^2$ as the bonded area. This measurement was performed for fifty fibers, and the arithmetic mean thereof was rounded off to two decimal places to obtain a value defined as the bonded area. The value obtained by rounding off to two decimal places in accordance with the following formula with the use of the obtained fiber cross-sectional area bonded area was defined as the bonded area per fiber cross-sectional area. Further, the constituent fibers of the nonwoven fabric had a mixture of main fibers and binder fibers, and the main fibers were specified from the degree of deformation of the fiber skeleton.

Bonded Area per Fiber Cross-sectional Area = Bonded Area (μm$^2$) /Fiber Cross-sectional Area (μm$^2$)

F. Through-hole Range

The nonwoven fabric surface was photographed with a scanning electron microscope (SEM) or the like at a magnification at which through-holes could be observed at hundred or more points. For through-holes at hundred points present in the photographed image, the equivalent circle diameter was measured as an integer in units of μm with the use of image analysis software WINROOF2015 manufactured by MITANI CORPORATION. The same operation was performed for five images, and the value obtained by subtracting the minimum value of the obtained equivalent circle diameter from the maximum value thereof was defined as the through-hole range.

G. Arithmetic Mean Roughness (Ra)

The nonwoven fabric surface was observed with a laser microscope VK-X200 manufactured by KEYENCE CORPORATION, and the arithmetic mean roughness was measured in accordance with JIS B 0601:2013 with the use of

analysis software VK-H1XA manufactured by KEYENCE CORPORATION. The arithmetic mean obtained at arbitrary five points was rounded off to two decimal places to obtain a value defined as the arithmetic mean roughness (Ra).

H. Flatness, Major Axis Length, and Minor Axis Length of Flat Fiber

The nonwoven fabric was embedded in an embedding agent such as an epoxy resin, a fiber transverse section was cut with a microtome fitted with a diamond knife, and the transverse section was photographed with a scanning electron microscope (SEM) or the like at a magnification at which the cross section could be identified. For the transverse section of a single fiber present in the photographed image, the maximum length of the transverse section of the single fiber was measured with the use of image analysis software WINROOF2015 manufactured by MITANI CORPORATION, and this value was rounded off to two decimal places in units of μm as the major axis length of the single fiber. The length was measured at which a line segment that was orthogonal to the maximum-length line segment at the midpoint of the maximum length intersected the fiber cross section, and this value was rounded off to two decimal places in units of μm as the minor axis length of the single fiber. With the use of the major axis length and the minor axis length, the flatness of the single fiber was calculated by the following formula.

Flatness = Major Axis Length (μm)/Minor Axis Length (μm)

The measurements mentioned above were performed for hundred fibers to calculate the major axis length, minor axis length, and flatness of each fiber, the arithmetic means of the major axis length and minor axis length of each fiber were rounded off to two decimal places to obtain values defined as the major axis length and the minor axis length, and the arithmetic mean of the flatness of each fiber was rounded off to the closest number to obtain a value defined as the flatness.

I. Variation in Minor Axis Length and Degree of Irregularity

The standard deviation was calculated from the minor axis lengths of the hundred fibers measured above, and the variation coefficient obtained by dividing the standard deviation by the arithmetic mean was rounded off to the closest whole number in units of % to calculate the variation in minor axis length.

In addition, with the use of the above-photographed image of the fiber cross section, the length of a segment of a line orthogonal to the maximum-length line segment, with the segment intersecting the fiber cross section, was measured at each of the points obtained by dividing the maximum length of the cross section into ten equal parts, the arithmetic mean and the standard deviation of the lengths at the ten points were calculated, and the standard deviation was divided by the mean value, and then rounded off to the closest whole number in units of percentage to calculate a value defined as the degree of irregularity of the single fiber. The same measurement was performed for ten fiber cross sections, and the arithmetic mean of the calculated degrees of irregularity of the ten single fibers was calculated as the degree of irregularity.

J. Fiber Length and Aspect Ratio

An image of the nonwoven fabric surface was observed, and photographed at a magnification at which ten or more fibers whose entire lengths could be measured could be observed, with a microscope VHX-2000 manufactured by KEYENCE CORPORATION. The lengths in the fiber axis directions of ten fibers randomly extracted from the photographed image were measured to one decimal place in units of mm. The arithmetic mean of measurement values in ten images photographed and measured similarly was rounded off to one decimal place to obtain a value defined as the fiber length. The aspect ratio was calculated by rounding off to the closest whole number in accordance with the following formula with the use of the fiber length and the minor axis length obtained above.

Aspect Ratio = Fiber Length (μm)/Minor Axis Length (μm)

K. Uniformity

The uniformity of the nonwoven fabric cut into 250 mm × 250 mm was subjected to three-grade evaluation by visual observation.

- A: favorable uniformity without any fiber lump or gradation (not visible).
- B: visible gradation, without any visible fiber lump.
- C: visible gradation and fiber lump

L. Adhesion

A nonwoven fabric sample piece cut out into 10 mm in length × 10 mm in width was attached to a skin surface, a drop of water was dropped thereto with a dropper, and then visually observed, and the adhesion to the skin was subjected to the following three-grade evaluation as an index of the adhesion.

A: the invisible sample piece adhesively attached even to wrinkles of the skin
B: the visible sample piece floating at a wrinkle part of the skin
C: the clearly visible sample piece floating overall

[Example 1]

With the use of a polyethylene terephthalate (PET) as a component A, and a polyethylene terephthalate copolymerized with 8.0 mol% of a sodium 5-sulfoisophthalate and 9 wt% of a polyethylene glycol (SSIA-PEG copolymerized PET) as a component B, the two types of polymers were discharged so as to have a composite form of multiple layers alternately laminated in one direction as shown in Fig. 2, and an undrawn yarn of 2.8 dtex in single fiber fineness was collected. The undrawn yarn was stretched to obtain a drawn yarn of 1.2 dtex in single fiber fineness.

The obtained undrawn yarn and drawn yarn of the multilayer laminated fiber were subjected to processing of cutting short so as to have a fiber length of 3.0 mm, the undrawn yarn was immersed for 60 minutes in an aqueous solution of 1% by weight sodium hydroxide (bath ratio: 1/100) heated to 70°C, whereas the drawn yarn was immersed for 30 minutes in an aqueous solution of 1% by weight sodium hydroxide (bath ratio: 1/100) heated to 90°C, and the component B was dissolved and removed from each of the yarns to obtain flat fibers each in a flat shape in a transverse section as shown in Fig. 1.

With the crystallized flat fibers obtained from the drawn yarn as main fibers and the amorphous flat fibers obtained from the undrawn yarn as binder fibers, the raw materials were put into water respectively so that the mixing ratios of the main fibers and binder fibers were 70% by weight and 30% by weight, thereby preparing a papermaking stock solution with a fiber concentration of 0.25% by weight.

This papermaking stock solution was used for papermaking with a square sheet machine (250 mm square) manufactured by KUMAGAI RIKI KOGYO Co., Ltd. so as to have a basis weight of 3.0 g/m$^2$, dried and heat-treated with a rotary dryer from KUMAGAI RIKI KOGYO Co., Ltd., set at 120°C, and then subjected to thermocompression bonding for 1 minute with a heating press machine manufactured by Gonno, set at 200°C × 10 MPa to obtain a nonwoven fabric.

The obtained nonwoven fabric was an ultrathin film of 5.3 μm in thickness, and at the same time, excellent in handleability with the extremely high toughness of 2.09, and also had an adequate porous structure formed with the porosity of 58.3%. Further, the nonwoven fabric was excellent in uniformity without any fiber lump or gradation. In a cross section of the nonwoven fabric, in the highly aligned cross-sectional directions of the flat fibers, the fibers in "plane" contact with each other were firmly bonded in a large area with the bonded area per fiber cross-sectional area being 15.23. With a through-hole range of 46 μm at the surface of the nonwoven fabric, the nonwoven fabric had through-holes formed in a uniform size. In addition, the nonwoven fabric had an extremely smooth surface with Ra of 4.43 μm. In the evaluation of the adhesion, the nonwoven fabric was excellent in adhesion, with the nonwoven fabric being difficult to visually recognize, because of being adhesively attached even to wrinkles of the skin. The results are shown in Table 1.

[Examples 2 and 3]

The same as in Example 1 was carried out except for changing the basis weight of the nonwoven fabric to 2.0 g/m$^2$ (Example 2) or 1.0 g/m$^2$ (Example 3).

In the obtained nonwoven fabrics, in the highly aligned cross-sectional directions of the flat fibers as in Example 1, the fibers in "plane" contact with each other were firmly bonded in a large area. The results of evaluating the nonwoven fabrics are as shown in Table 1, in which the thickness is reduced with the decrease in basis weight, and the nonwoven fabric has achieved drastic reductions in thickness, which have failed to be achieved by the related art. In addition, while the toughness has a tendency to be decreased with the decrease in basis weight, the nonwoven fabrics were favorable in handleability.

[Examples 4 and 5]

The same as in Example 1 was carried out except for changing the basis weight of the nonwoven fabric to 10.0 g/m$^2$ (Example 4) or 15.0 g/m$^2$ (Example 5).

In the obtained nonwoven fabrics, in the highly aligned cross-sectional directions of the flat fibers as in Example 1, the fibers were firmly bonded in a large area. The results of evaluating the nonwoven fabrics are as shown in Table 1, in

which with the increase in basis weight, the thickness is increased, and the adhesion to other materials has a tendency to be degraded. In addition, the nonwoven fabrics were excellent in handleability, with the toughness being as high as in Example 1. The results are shown in Table 1.

[Examples 6 and 7]

The same as in Example 1 was carried out, except for changing the mixing ratios of the main fibers and binder fibers to 50% : 50% by weight (Example 6) and 90% :10% by weight (Example 7).

In the obtained nonwoven fabrics, in the highly aligned cross-sectional directions of the flat fibers as in Example 1, the fibers were firmly bonded in a large area. The results of evaluating the nonwoven fabrics are as shown in Table 1, in which with the increase in the mixing ratio of the binder fibers, the nonwoven fabric is reduced in thickness and decreased in porosity, while the nonwoven fabrics have a tendency to improve the toughness. Further, within the scope of the examples, even when the mixing ratio of the binder fibers was increased or decreased, a balance was sufficiently achieved between the thin film and the mechanical characteristics. The results are shown in Table 1.

[Table 1]

| | | | | Example 1 | Example 2 | Example 3 | Example 4 | Example 5 | Example 6 | Example 7 |
|---|---|---|---|---|---|---|---|---|---|---|
| Constituent fiber | Main fiber | Polymer | - | PET | PET | PET | PET | PET | PET | PET |
| | | Cross-sectional shape | - | Flat | Flat | Flat | Flat | Flat | Flat | Flat |
| | | Flatness | - | 20 | 20 | 20 | 20 | 20 | 20 | 20 |
| | | Minor axis length | µm | 0.50 | 0.50 | 0.50 | 0.50 | 0.50 | 0.50 | 0.50 |
| | | Variation in minor axis length | % | 37 | 37 | 37 | 37 | 37 | 37 | 37 |
| | | Degree of irregularity | % | 25 | 25 | 25 | 25 | 25 | 25 | 25 |
| | | Fiber length | mm | 3.0 | 3.0 | 3.0 | 3.0 | 3.0 | 3.0 | 3.0 |
| | | Aspect ratio | - | 6000 | 6000 | 6000 | 6000 | 6000 | 6000 | 6000 |
| | | Mixing ratio | % | 70 | 70 | 70 | 70 | 70 | 50 | 90 |
| | Binder fiber | Polymer | - | PET | PET | PET | PET | PET | PET | PET |
| | | Cross-sectional shape | - | Flat | Flat | Flat | Flat | Flat | Flat | Flat |
| | | Flatness | - | 20 | 20 | 20 | 20 | 20 | 20 | 20 |
| | | Minor axis length | µm | 1.00 | 1.00 | 1.00 | 1.00 | 1.00 | 1.00 | 1.00 |
| | | Fiber length | mm | 3.0 | 3.0 | 3.0 | 3.0 | 3.0 | 3.0 | 3.0 |
| | | Aspect ratio | - | 3000 | 3000 | 3000 | 3000 | 3000 | 3000 | 3000 |
| | | Mixing ratio | % | 30 | 30 | 30 | 30 | 30 | 50 | 10 |
| Nonwoven fabric characteristics and structure | Basis Weight | | g/m$^2$ | 3.0 | 2.0 | 1.0 | 10.0 | 15.0 | 3.0 | 3.0 |
| | Thickness | | µm | 5.3 | 3.4 | 1.7 | 16.3 | 25.0 | 4.8 | 6.1 |
| | Porosity | | % | 58.3 | 57.1 | 57.6 | 57.6 | 55.9 | 54.0 | 64.0 |
| | Tensile strength | | N/cm | 1.93 | 1.20 | 0.40 | 6.30 | 9.50 | 2.13 | 1.39 |
| | Tensile elongation | | % | 10.6 | 8.3 | 11.0 | 10.1 | 10.1 | 11.0 | 7.5 |
| | Toughness | | - | 2.09 | 1.73 | 1.33 | 2.00 | 2.01 | 2.50 | 1.27 |
| | Bonded Area per Fiber Cross-sectional Area | | - | 15.23 | 14.82 | 15.30 | 13.29 | 13.32 | 15.83 | 13.77 |
| | Through-hole Range | | µm | 46 | 46 | 100 | - | - | 50 | 54 |
| | Arithmetic Mean Roughness (Ra) | | µm | 4.43 | 3.12 | 1.02 | 4.80 | 5.58 | 4.52 | 4.52 |
| | Uniformity | | - | A | A | A | A | A | A | A |
| | Adhesion | | - | A | A | A | B | C | A | A |

PET: polyethylene terephthalate

[Example 8]

The same as in Example 1 was carried out except for changing the pressure at the time of heating press to 1 MPa.

In the obtained nonwoven fabric, in the highly aligned cross-sectional directions of the flat fibers as in Example 1, the fibers were firmly bonded in a large area, but there was a tendency to slightly coarsen the intervals between the fibers. The results of evaluating the nonwoven fabrics are as shown in Table 1, in which with the decrease in the pressure for the heating press, the increased thickness of the nonwoven fabric increases the porosity, and decreases the toughness due to weakened bonding between the fibers, while the nonwoven fabric was sufficiently excellent in handleability. The results are shown in Table 2.

[Comparative Example 1]

The same as in Example 1 was carried out all except for using, as the fibers constituting the nonwoven fabric, a PET drawn yarn with a round cross section (fiber diameter: 3.10 μm) for the main fibers and a PET undrawn yarn with a round cross section (fiber diameter: 4.30 μm) for the binder fibers.

The evaluation results are as shown in Table 2, in which the use of the round cross-section fibers for both the main fibers and the binder fibers has a tendency to increase the thickness and increase the porosity. In addition, with the extremely low toughness of 0.18, the nonwoven fabric was inferior in handleability, with the nonwoven fabric being deformed or broken by slight tension at the time of handling. Also with large unevenness of gradation at the surface of the nonwoven fabric, the nonwoven fabric was inferior in uniformity. The observation of a cross section of the nonwoven fabric found the fibers in point contact with each other in a small area, which resulted in a significant decrease in the bonded area per fiber cross-sectional area. In addition, with Ra increased, the adhesion was also decreased.

[Comparative Example 2]

The same as in Comparative Example 1 was carried out all except for using a PET core-sheath yarn (fiber diameter: 10.50 μm) with a round cross section for the binder fibers, papermaking so as to be 60 g/m$^2$ in basis weight, and thermocompression bonding for 1 minute at 200°C × 10 MPa.

The evaluation results are as shown in Table 2, in which the toughness is as excellent as 1.27, because the significantly increased constituent fiber amount made defects less likely to appear, while the thickness is as large as 87.0 μm, thereby resulting in a failure to achieve a balance between the mechanical characteristics and a thin film. Because of the thick nonwoven fabric, the adhesion was also extremely low.

[Examples 9 and 10]

The same as in Example 1 was carried out except for variously changing the flatness and minor axis lengths of the flat fibers constituting the nonwoven fabric (Examples 9 and 10). It is to be noted that the flatness and the minor axis lengths were changed by changing the number of layers of multilayer laminated fiber as a raw material for flat fibers.

In the obtained nonwoven fabric, in the aligned cross-sectional directions of the flat fibers, the fibers were bonded in a large area, but the uniformity in cross-sectional direction was slightly disordered. The results of evaluating the nonwoven fabrics are as shown in Table 2, in which the nonwoven fabrics each have a tendency to undergo an increase in thickness and an increase in porosity with the decrease in flatness and the increase in minor axis length. On the other hand, with the decrease in flatness and the increase in minor axis length, the toughness is decreased, and the handleability is degraded, which was not fatally problematic enough to cause any breakage. In cross sections of the nonwoven fabrics, with the decrease in flatness and the increase in minor axis length, the plane contact has a tendency to be reduced to point contact, which resulted in a decrease in the bonded area per fiber cross-sectional area. In addition, with Ra increased, the surface smoothness has a tendency to be slightly degraded, and the adhesion also has a tendency to be decreased.

[Examples 11 and 12]

The same as in Example 1 was carried out all except for changing the variation in minor axis length for the flat fibers constituting the nonwoven fabric (Example 11) and the degree of irregularity (Example 12). It is to be noted that the variation in minor axis length and the degree of irregularity were changed by changing the flow channel geometry of the spinneret for manufacturing the multilayer laminated fiber as a raw material of flat fibers.

In the obtained nonwoven fabrics, in the aligned cross-sectional directions of the flat fibers as in Example 1, the fibers were firmly bonded in a large area. The results of evaluating the nonwoven fabrics are as shown in Table 2, in which with the variation in minor axis length or the decrease in the degree of unevenness, the uniformity has a tendency to be degraded, due to slightly appearing unevenness of gradation in the visual observation of the nonwoven fabrics. In spite of the same bonded area per fiber cross-sectional area as in Example 1, the toughness has a tendency to be decreased due to the slightly degraded uniformity.

[Table 2]

| | | | | Example 8 | Comparative Example 1 | Comparative Example 2 | Example 9 | Example 10 | Example 11 | Example 12 |
|---|---|---|---|---|---|---|---|---|---|---|
| Constituent fiber | Main fiber | Polymer | - | PET | PET | PET | PET | PET | PET | PET |
| | | Cross-sectional shape | - | Flat | Round | Round | Flat | Flat | Flat | Flat |
| | | Flatness | - | 20 | 1 | 1 | 10.0 | 5.0 | 20 | 20 |
| | | Minor axis length | µm | 0.50 | 3.10 (fiber diameter) | 3.10 (fiber diameter) | 1.00 | 2.00 | 0.50 | 0.50 |
| | | Variation in minor axis length | % | 37 | - | - | 35 | 37 | 18 | 37 |
| | | Degree of irregularity | % | 25 | - | - | 22 | 25 | 25 | 16 |
| | | Fiber length | mm | 3.0 | 3.0 | 3.0 | 3.0 | 3.0 | 3.0 | 3.0 |
| | | Aspect ratio | - | 6000 | 968 | 968 | 3000 | 1500 | 6000 | 6000 |
| | | Mixing ratio | % | 70 | 70 | 70 | 70 | 70 | 70 | 70 |
| | Binder fiber | Polymer | - | PET | PET | PET/ Copolymerized PET | PET | PET | PET | PET |
| | | Cross-sectional shape | - | Flat | Round | Round (core-sheath) | Flat | Flat | Flat | Flat |
| | | Flatness | - | 20 | 1 | 1 | 20 | 20 | 20 | 20 |
| | | Minor axis length | µm | 1.00 | 4.30 (fiber diameter) | 10.50 (fiber diameter) | 1.00 | 1.00 | 1.00 | 1.00 |
| | | Fiber length | mm | 3.0 | 3.0 | 5.0 | 3.0 | 3.0 | 3.0 | 3.0 |
| | | Aspect ratio | - | 3000 | 697 | 476 | 3000 | 3000 | 3000 | 3000 |
| | | Mixing ratio | % | 30 | 30 | 30 | 30 | 30 | 30 | 30 |
| Nonwoven fabric characteristics and structure | Basis Weight | | g/m² | 3.0 | 3.0 | 60.0 | 3.0 | 3.0 | 3.0 | 3.0 |
| | Thickness | | µm | 7.0 | 8.2 | 87.0 | 6.9 | 8.9 | 5.8 | 5.7 |
| | Porosity | | % | 68.5 | 77.3 | 49.0 | 68.0 | 75.2 | 62.0 | 61.3 |
| | Tensile strength | | N/cm | 1.60 | 0.24 | 22.13 | 1.28 | 0.85 | 1.48 | 1.42 |
| | Tensile elongation | | % | 6.8 | 4.3 | 16.50 | 7.2 | 6.3 | 8.0 | 8.0 |
| | Toughness | | - | 1.39 | 0.18 | 1.27 | 1.14 | 0.71 | 1.40 | 1.34 |
| | Bonded Area per Fiber Cross-sectional Area | | - | 13.82 | 0.67 | 0.52 | 8.20 | 4.30 | 14.8 | 14.7 |
| | Through-hole Range | | µm | 48 | 121 | - | 70 | 83 | 48 | 50 |
| | Arithmetic Mean Roughness (Ra) | | µm | 5.71 | 9.32 | 13.62 | 6.20 | 7.10 | 3.80 | 4.82 |
| | Uniformity | | - | A | B | A | A | B | B | B |
| | Adhesion | | - | A | B | C | B | B | A | A |

PET: polyethylene terephthalate

## DESCRIPTION OF REFERENCE SIGNS

1: Flat fiber
2: Minor axis length
3: Major axis length
4: Multilayer laminated fiber
5: Component A
6: Component B
7: Main fiber
8: Binder fiber
9: Bonded area
10: Fiber cross-sectional area

## Claims

**1.** A nonwoven fabric of 30.0 µm or less in thickness, and of 0.50 or more in toughness value calculated as a product of a specific tensile strength and a square root of a tensile elongation.

**2.** The nonwoven fabric according to claim 1, having a porosity of 50% or more.

**3.** The nonwoven fabric according to claim 1 or 2, wherein a bonded area per fiber cross-sectional area in a fiber constituting the nonwoven fabric is 3.00 or more.

**4.** A fibrous product comprising the nonwoven fabric according to claim 1 in at least a part of the fibrous product.

**5.** A sheet wherein the nonwoven fabric according to claim 1 is filled with a resin or particles.

**6.** A solid electrolyte sheet in which the nonwoven fabric according to claim 1 is filled with a solid electrolyte.

[Fig. 1]

2 Minor axis length
1
3 Major axis length

[Fig.2]

4
5
6

[Fig.3]

7
8
9
10

## INTERNATIONAL SEARCH REPORT

International application No. **PCT/JP2024/038618**

**A. CLASSIFICATION OF SUBJECT MATTER**

***D04H 1/4391***(2012.01)i; ***D21H 13/12***(2006.01)i; ***H01M 50/44***(2021.01)i
FI: D04H1/4391; D21H13/12; H01M50/44

According to International Patent Classification (IPC) or to both national classification and IPC

**B. FIELDS SEARCHED**

Minimum documentation searched (classification system followed by classification symbols)

D04H1/4391; D21H13/12; H01M50/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-28869 A (JAPAN VILENE CO., LTD.) 25 February 2021 (2021-02-25) claim 1, examples | 1, 2, 4-6 |
| A | claim 1, examples | 3 |
| X | WO 2021/085250 A1 (TEIJIN FRONTIER CO., LTD.) 06 May 2021 (2021-05-06) examples | 1, 2, 4 |
| A | examples | 3, 5, 6 |
| X | JP 2012-190622 A (MITSUBISHI PAPER MILLS LTD.) 04 October 2012 (2012-10-04) examples | 1, 4 |
| A | examples | 2, 3, 5, 6 |
| X | JP 2023-69101 A (TEIJIN FRONTIER CO., LTD.) 18 May 2023 (2023-05-18) examples | 1, 4 |
| A | examples | 2, 3, 5, 6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/038618**

**C. DOCUMENTS CONSIDERED TO BE RELEVANT**

| Category* | Citation of document, with indication, where appropriate, of the relevant passages | Relevant to claim No. |
|---|---|---|
| A | JP 2003-20524 A (KURARAY CO., LTD.) 24 January 2003 (2003-01-24)<br>entire text | 1-6 |
| P, X | JP 2023-177489 A (JAPAN VILENE CO., LTD.) 14 December 2023 (2023-12-14)<br>paragraph [0001], example 1 | 1, 2, 4-6 |
| P, A | paragraph [0001], example 1 | 3 |
| P, A | JP 2024-68655 A (TORAY INDUSTRIES, INC.) 20 May 2024 (2024-05-20)<br>entire text, all drawings | 1-6 |

Form PCT/ISA/210 (second sheet) (July 2022)

**INTERNATIONAL SEARCH REPORT**
**Information on patent family members**

International application No.
**PCT/JP2024/038618**

| Patent document cited in search report | Publication date (day/month/year) | Patent family member(s) | Publication date (day/month/year) |
|---|---|---|---|
| JP 2021-28869 A | 25 February 2021 | (Family: none) | |
| WO 2021/085250 A1 | 06 May 2021 | US 2022/0376356 A1 examples<br>EP 4053985 A1<br>CN 114616369 A | |
| JP 2012-190622 A | 04 October 2012 | (Family: none) | |
| JP 2023-69101 A | 18 May 2023 | (Family: none) | |
| JP 2003-20524 A | 24 January 2003 | (Family: none) | |
| JP 2023-177489 A | 14 December 2023 | (Family: none) | |
| JP 2024-68655 A | 20 May 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60038193 A
- WO 2008130020 A
- JP 2023069101 A